Europäisches Patentamt

European Patent Office

Office européen des brevets

(19)

(11)  EP 0 442 370 B1

(12)  **EUROPÄISCHE PATENTSCHRIFT**

(45) Veröffentlichungstag und Bekanntmachung des Hinweises auf die Patenterteilung:
**26.06.1996  Patentblatt 1996/26**

(51) Int Cl.⁶: **C08J 3/03**, C08L 57/00, D06N 5/00

(21) Anmeldenummer: **91101650.9**

(22) Anmeldetag: **07.02.1991**

(54) **Verwendung von wässrigen Polymerisatdispersionen**

Use of aqueous polymer dispersions

Utilisation de dispersions polymères aqueuses

(84) Benannte Vertragsstaaten:
**DE GB IT NL SE**

(30) Priorität: **16.02.1990  DE 4004915**

(43) Veröffentlichungstag der Anmeldung:
**21.08.1991  Patentblatt 1991/34**

(73) Patentinhaber: **BASF Aktiengesellschaft**
**D-67063 Ludwigshafen (DE)**

(72) Erfinder:
• **Matejcek, Franz, Dr.**
  **W-6715 Lambsheim (DE)**
• **Angel, Maximilian, Dr.**
  **W-6704 Mutterstadt (DE)**
• **Schuhmacher, Rudolf, Dr.**
  **W-6737 Boehl-Iggelheim (DE)**

(56) Entgegenhaltungen:
**EP-A- 0 174 566      EP-A- 0 373 918**
**DE-B- 1 051 436**

**Beschreibung**

Die vorliegende Erfindung betrifft die Verwendung von wäßrigen Polymerisatdispersionen, welche dadurch erhältlich sind, daß man in eine wäßrige Ausgangsdispersion, enthaltend

A) 25 bis 60 Gew.-%, bezogen auf die Ausgangsdispersion, eines als disperse Phase vorliegenden Polymerisats A, das aus

a) 3 bis 55 Gew.-% wenigstens einer 3 bis 5 C-Atome enthaltenden $\alpha,\beta$-monoethylenisch ungesättigten Mono- oder Dicarbonsäure, eines Anhydrids dieser Säuren oder eines Gemisches dieser Monomeren (Monomere a) und
b) 45 bis 97 Gew.-% wenigstens eines sonstigen copolymerisierbaren Monomeren (Monomere b)

in polymerisierter Form aufgebaut ist und in disperser Verteilung eine mittlere Teilchengröße von 20 bis 400 nm aufweist,
B) wirksamen Mengen an Emulgatoren und
C) Wasser als Restmenge,

bei einer Temperatur, die unterhalb des Siedepunktes von reinem Wasser und oberhalb der Glasübergangstemperatur des Polymerisates A liegt, bezogen auf die Molzahl der in Form der Monomeren a einpolymerisierten Säurefunktionen des Polymerisates A, 5 bis 60 mol-% wenigstens eines der zweiwertigen Metalle Magnesium, Calcium oder Zink in Form seines Oxids, Hydroxids, Carbonats oder Hydrogencarbonats oder in Form eines Gemisches dieser basischen Salze einarbeitet, als Bindemittel für Vliessstoffe.

Außerdem betrifft die Erfindung Bindemittel für Dachbahnvliese und bituminierte Dachbahnen auf Basis von Vliesstoffen, die mit diesen Bindemitteln gebunden sind.

Die DE-B 10 51 436 beschreibt wäßrige Polymerisatdispersionen eines Polymerisatgehaltes von 1 bis 60 Gew.-%, die als Polymerisat ein Mischpolymerisat, das aus wenigstens einem niederen Alkylester der Acryl- oder Methacrylsäure und zu 0,25 bis 25 mol-% aus Acryl-, Methacryl- oder Itaconsäure aufgebaut ist, und zusätzlich eine basische Metallverbindung aus der Gruppe der Oxide, Hydroxide oder anderer basischer Salze, z.B. der Acetate, von mehrwertigen Metallen enthalten, wobei die Menge der basischen Metallverbindung so bemessen ist, daß sie 0,25 bis 25 mol-% der Carboxylgruppen des Mischpolymerisats neutralisiert. Diese wäßrigen Kunstharzdispersionen werden für Verfilmungen empfohlen, die eine erhöhte innere Festigkeit aufweisen sollen, wobei die Polymerisatdispersionen, die eine relativ gut wasserlösliche Metallverbindung, z.B. ein Acetat, enthalten, gegenüber jenen Polymerisatdispersionen, die eine basische Metallverbindung mit weniger ausgeprägter Wasserlöslichkeit, z.B. ein Oxid oder ein Hydroxid, enthalten, als bevorzugt empfohlen werden, da sich bei einer Verwendung dieser weniger wasserlöslichen basischen Metallverbindungen Kunstharzdispersionen ergeben, die beim Stehen zur Bildung von Bodensätzen neigen und deren Verfilmungen im allgemeinen trüb sind sowie bezüglich ihrer inneren Festigkeit nicht voll zu befriedigen vermögen. Nachteilig an den Kunstharzdispersionen, die eine relativ gut wasserlösliche Metallverbindung enthalten, ist jedoch, daß die die gute Wasserlöslichkeit der Metallverbindung bedingenden Anionen, z.B. das Acetat-Anion, sich in der Regel einerseits nicht inert verhalten und andererseits keine Konstituenten des Wasser sind, wodurch im allgemeinen die Eigenschaften der Kunstharzdispersionen beeinträchtigt werden oder die Kunstharzdispersionen den Reinheitsanforderungen nicht genügen. Demgemäß sind auch mehrwertige Metalle enthaltende wäßrige Polymerisatdispersionen von Nachteil, die zwar das Metall z.B. in Form eines Oxids oder Hydroxids, jedoch zur Vermeidung von Koagulat- und Bodensatzbildung und zur Gewährleistung klarer Verfilmungen mit hoher innerer Festigkeit, unter Mitverwendung von nicht inerten Hilfssystemen eingearbeitet enthalten. Beispiele für derartige Dispersionen enthält u.a. die DE-A-18 11 247, in der z.B. Ammoniak als Hilfssystem eingesetzt wird, das die metallische Komponenten in wäßriger Lösung zu komplexieren vermag.

Aus der nicht vorveröffentlichten EP-A-373 918 sind ebenfalls mit Metallsalzen vernetzte Dispersionen bekannt.

Der vorliegenden Erfindung lag die Aufgabe zugrunde, wäßrige Polymerisatdispersionen für Verfilmungen mit hoher innerer Festigkeit, die insbesondere auch bei erhöhtem Feststoffgehalt frei von den genannten Nachteilen sind, zur Verfügung zu stellen. Darüber hinaus sollten Bindemittel für Vliesstoffe, die beispielsweise für bituminierte Dachbahnen mit guten Gebrauchseigenschaften wie einer hohen Wärmestandfestigkeit eingesetzt werden können, bereitgestellt werden.

Demgemäß wurden die eingangs definierte Verwendung gefunden.

Gute Ergebnisse werden erzielt, wenn das Polymerisat A aus 10 bis 25 Gew.-% a) und 75 bis 90 Gew.-% b) aufgebaut ist.

Als Monomere a eignen sich u.a. Acrylsäure, Methacrylsäure, Maleinsäure, Fumarsäure, Crotonsäure und Itaconsäure. Bevorzugt werden Acryl- und Methacrylsäure verwendet, wobei das Einpolymerisieren von Methacrylsäure besonders vorteilhaft ist.

Als Monomere b eignen sich in vorteilhafter Weise Ester der Acryl- oder Methacrylsäure mit einem 1 bis 10 C-Atome enthaltenden aliphatischen Alkohol, wobei die Methyl-, Ethyl-, Isopropyl-, n- und iso-Butyl-, n-Hexyl-sowie 2-Ethylhexylester bevorzugt sind. Ein besonders bevorzugter Acrylsäureester ist das n-Butylacrylat, das mit Vorteil in Mengen von mehr als 50 Gew.-%, bezogen auf die Gesamtmenge der Monomeren, einpolymerisiert wird. Gute Ergebnisse werden mit 2 Ethylhexylester erzielt.

Ferner eigenen sich als Monomere b aromatische Vinylverbindungen wie Styrol, Vinylester niederer Alkancarbonsäuren wie Vinylacetat und Vinylpropionat, Vinylchlorid, Vinylidenchlorid, Nitrile von niederen $\alpha,\beta$-monoethylenisch ungesättigten Carbonsäuren wie Acrylnitril und Methacrylnitril sowie die Amide dieser Carbonsäuren, Acrylsäure- oder Methacrylsäureester mit niederen mehrwertigen Alkoholen, ungesättigte Sulfon- und Phosphonsäuren sowie deren Alkalimetallsalze wie Na-Vinylsulfonat, aber auch niedere einfach- oder mehrfach ungesättigte Kohlenwasserstoffe wie Ethylen und Butadien. Werden als Monomere b Alkalimetallsalze monoethylenisch ungesättigter Säuren eingesetzt, sollte deren Gewichtsanteil, bezogen auf die Gesamtmenge der Monomeren, nicht mehr als 1 Gew.-% betragen. Vorzugsweise wird Methacrylnitril, Acrylamid, Methacrylamid, Hydroxyethylacrylat, Hydroxypropylacrylat und/oder insbesondere Acrylnitril in Mengen von 4 bis 15 Gew.-%, bezogen auf die Gesamtmenge der Monomeren, einpolymerisiert.

Gruppen von Polymerisaten A mit guten anwendungstechnischen Eigenschaften weisen in einpolymerisierter Form folgende Monomerenzusammensetzungen auf:

```
I)        3 bis 45,        bevorzugt 10 bis 25 Gew.-% Monomere a
         55 bis 97,        bevorzugt 75 bis 90 Gew.-% wenigstens eines
                           Esters der Acryl- und/oder



                           Methacrylsäure mit einem 1 bis 10 C-Atome
                           enthaltenden aliphatischen Alkohol und
         0 bis 40 Gew.-% sonstige copolymerisierbare Monomere


II)       3 bis 30,        bevorzugt 10 bis 30 Gew.-% Monomere a
         35 bis 52 Gew.-% Styrol und
         35 bis 45 Gew.-% Butadien


III)      5 bis 25,        bevorzugt 10 bis 25 Gew.-% Monomere a
         40 bis 70 Gew.-% Vinylacetat und/oder Vinylpropionat und
          5 bis 40 Gew.-% Ethylen,
```

wobei die Zusammensetzungen der Gruppe I besonders bevorzugt sind.

Die Gruppen IV bis VI von Polymerisaten A mit besonders guter Wasserfestigkeit haben in einpolymerisierter Form folgende Monomerzusammensetzungen:

| IV) | 3 bis 44,5, | bevorzugt 6 bis 20 Gew.-% Monomere a, |
|---|---|---|
| | 55 bis 96,5, | bevorzugt 60 bis 90 Gew.-% wenigstens eines Esters der Acryl- oder Methacrylsäure mit einem 1 bis 10 C-Atome enthaltenden aliphatischen Alkohol, |
| | 0,5 bis 5, | bevorzugt 0,9 bis 4 Gew.-% N-Methylolacrylamid, N-Methylolmethacrylamid, Acrylamidoglycolsäure oder Methacrylamidoglycolsäure |
| | 0 bis 40 Gew.-% | sontige copolymerisierbare Monomere |
| V) | 3 bis 30, | bevorzugt 10 bis 25 Gew.-% Monomere a, |
| | 35 bis 48 Gew.-% | Styrol, |
| | 35 bis 45 Gew.-% | Butadien und |
| | 0,5 bis 5, | bevorzugt 0,9 bis 4 Gew.-% N-Methylolacrylamid, N-Methylolmethacrylamid, Acrylamidoglycolsäure oder Methacrylamidoglycolsäure |
| VI) | 5 bis 20, | bevorzugt 10 bis 20 Gew.-% Monomere a, |
| | 40 bis 70 Gew.-% | Vinylacetat und/oder Vinylpropionat, |

(fortgesetzt)

| | 5 bis 40 Gew.-% | Ethylen und |
|---|---|---|
| | 0,5 bis 5, | bevorzugt 0,9 bis 4 Gew.-% N-Methylolacrylamid, N-Methylolmethacrylamid, Acrylamidoglycolsäure oder Methacrylamidoglycolsäure |

Die Gew.-% der Zusammensetzungen I bis VI beziehen sich jeweils auf die Gesamtmenge der Monomeren.

N-Methylol(meth)acrylamid wird vor (Meth)acrylamidoglycolsäure bevorzugt. Acrylamidoglycolsäure hat die Formel

$$CH_2=CH-CO-N-CHOH-COOH.$$

Gute Ergebnisse liefern die Zusammensetzungen der Gruppe IV.

Insgesamt werden die Gewichtsanteile der am Aufbau eines Polymerisates A beteiligten Monomeren vorzugsweise so gewählt, daß das Polymerisat A eine Glasübergangstemperatur von -40 bis 60, vorzugsweise von -30 bis 20°C aufweist. Die Glasübergangstemperatur ist in bekannter Weise nach ASTM 3418/82 (sog. "midpoint-Temperatur) meßbar. Eine Vorausberechnung der Tg ist aus den Gewichtsanteilen der am Aufbau eines Polymeren beteiligten Monomeren nach der Beziehung von Fox möglich. Nach Fox (T.G. Fox, Bull. Am. Phys. Soc. (Ser. II) 1, 123 (1956)) gilt für die Glasübergangstemperatur von Mischpolymerisaten in guter Näherung:

$$\frac{1}{Tg} = \frac{X^1}{Tg^1} + \frac{X^2}{Tg^2} + \ldots\ldots \frac{X^n}{Tg^n},$$

wobei, $X^1$, $X^2$ ..., $X^n$ die Massenbrüche der Monomeren 1, 2 ..., n und $Tg^1$, $Tg^2$, ..., $Tg^n$ die Glasübergangstemperaturen der jeweils nur aus einem der Monomeren 1, 2, ... oder n aufgebauten Polymeren in Grad Kelvin bedeuten. Die Glasübergangstemperaturen dieser Homopolymerisate der oben aufgeführten Monomeren sind im wesentlichen bekannt und z.B. in J. Brandrup, E.H. Immergut, Polymer Handbook 1st Ed. J. Wiley, New York, 1966 und 2nd Ed. J. Wiley, New York, 1975 aufgeführt.

Als wäßrige Ausgangsdispersionen werden vorzugsweise Primärdispersionen eingesetzt. Das sind solche Dispersionen, deren Herstellung durch radikalische Polymerisation der jeweiligen Monomeren a und b in wäßrigem Medium unter den bekannten Bedingungen der Emulsionspolymerisation in Gegenwart von wasserlöslichen radikalbildenden Initiatoren und Emulgatoren erfolgt. Bevorzugte Ausgangsdispersionen bestehen daher aus dem Polymerisat A, Emulgator B und Wasser als Restmenge.

Als wasserlösliche Emulsionspolymerisationsinitiatoren kommen vor allem anorganische Peroxide in Betracht, unter denen die Peroxidisulfate wie Natrium-, Kalium- oder Ammoniumperoxidisulfat besonders bevorzugt sind.

Als Emulgatoren kommen anionische, kationische und nichtionische Emulgatoren in Betracht, wobei die Verwendung, insbesondere die alleinige Verwendung anionischer Emulgatoren bevorzugt wird. Besonders bewährt haben sich als Emulgatoren ethoxylierte Alkylphenole (EO-Grad: 3 bis 30, Alkylrest: $C_8$ bis $C_{10}$), ethoxylierte Fettalkohole (EO-Grad: 5 bis 50, Alkylrest: $C_8$ bis $C_{25}$), die Alkalimetallsalze der sulfatierten Derivate dieser Ethoxylierungsprodukte sowie die Alkalimetallsalze von Alkylsulfonsäuren, z.B. Natrium-n-dodecylsulfonat oder Natrium-n-tetradecylsulfonat, von Alkylarylsulfonsäuren, z.B. Natrium-n-dodecylbenzolsulfonat oder Natrium-n-tetradecylbenzolsulfonat, von höheren Fettsäuren wie Palmitin- und Stearinsäure sowie von zweifach sulfonierten Mono- oder Dialkyldiphenylethern.

Die gewünschte mittlere Teilchengröße $\bar{d}$ der dispersen Phase, 20 bis 400, vorzugsweise 20 bis 300 nm (bestimmt nach der Methode der dynamischen Lichtstreuung, s. z.B. E. Lüddecke und D. Horn, Chem. Ing. Tech. 54 (1982), 266 oder H. Auweter und D. Horn, J. Coll. und Int. Sci. 105 (1985), 399, läßt sich in an sich bekannter Weise durch Menge und Typ der verwendeten Emulgatoren steuern, wobei die Polymerisatteilchen um so größer werden, je kleiner die verwendete Emulgiermittelmenge ist. Bezogen auf die Menge der eingesetzten Monomeren werden in der Regel 0,3 bis 4, vorzugsweise 0,4 bis 3,5 Gew.-% an Emulgatoren eingesetzt. Dabei werden üblicherweise wäßrige Ausgangsdispersionen erhalten, deren Lichtdurchlässigkeit (LD-Wert), nach Verdünnung auf einen Feststoffgehalt von 0,01 Gew.-%, gemessen mit einem handelsüblichen Photometer (bei einer Wellenlänge von 0,546 μm) und einer Schichtdicke von 25 mm relativ zu Wasser (dem willkürlich ein LD-Wert von 100 zugeordnet wird), 25 bis 98, vorzugsweise 65 bis 95 beträgt. Der LD-Wert einer wäßrigen Polymerisatdispersion ist ein qualitatives Maß für die mittlere Teilchengröße der dispersen Phase. Die Emulsionspolymerisationstemperatur und die verwendete Menge an Polymerisationsinitiatoren wird in an sich bekannter Weise so bemessen, daß ein gewichtsmittleres Molekulargewicht $\bar{M}_w$ des dispergierten Polymerisates A von $5 \cdot 10^3$ bis $5 \cdot 10^6$, bevorzugt von $10^5$ bis $2 \cdot 10^6$, erhalten wird. Gegebenenfalls können zusätzlich das Molekulargewicht regelnde Substanzen wie tert.-Dodecylmercaptan angewendet werden. Weitere mögliche Hilfsstoffe sind puffernd wirkende Substanzen wie Natriumpyrophosphat. Die Emulsionspolymerisationstemperatur beträgt in der Regel 25 bis 100, vorzugsweise 60 bis 95°C und die Polymerisationsinitiatoren werden üblicherweise in Mengen, bezogen auf die Monomeren, von 0,1 bis 3 Gew.-% eingesetzt.

Die Emulsionspolymerisation zur Herstellung des Polymerisates A kann sowohl als Chargenprozeß als auch in Form eines Zulaufverfahrens durchgeführt werden, wobei in beiden Fällen auch stufenweise polymerisiert werden kann. Bevorzugt ist das Zulaufverfahren, bei dem man einen Teil des Polymerisationsansatzes vorlegt, auf die Polymerisationstemperatur erhitzt und anschließend den Rest in getrennten Zuläufen, von denen einer die Monomeren in reiner oder in emulgierter Form enthält, kontinuierlich zuführt. Die Zufuhr der Monomeren als wäßrige Emulsion wird bevorzugt. Der Feststoffgehalt der Ausgangsdispersion beträgt vorzugsweise 40 bis 55 Gew.-%.

Unter den geeigneten basischen Salzen der zweiwertigen Metalle Magnesium, Calcium oder Zink, nämlich den Oxiden, Hydroxiden, Carbonaten und Hydrogencarbonaten, sind die Oxide von besonderem Interesse. Als metallische Komponente wird mit Vorteil Zink verwendet, da dieses eine besonders hohe innere Festigkeit der Verfilmungen der erfindungsgemäßen wäßrigen Kunstharzdispersionen bewirkt und bemerkenswerter Weise zu Polymerisatdispersionen mit vorteilhaftem Fließverhalten, insbesondere bei hohen Feststoffgehalten, führt. Die Einarbeitung der basischen Salze erfolgt in der Regel in feiner Körnung durch 2- bis 3-stündiges Einrühren in die Ausgangsdispersion, deren pH-Wert vorzugsweise weniger als 3 beträgt. Erhöhte Einrührtemperaturen begünstigen die Einarbeitung der basischen Salze.

Die bevorzugten Körnungen weisen eine nach dem Verfahren von Brunauer, Emmet und Teller bestimmte BET-Oberfläche (siehe P. W. Atkins, Physikalische Chemie, VCH-Verlag, D-6940 Weinheim, 1987, Seite 799ff) von 2 bis 5 $m^2/g$ auf.

In anwendungstechnisch vorteilhafter Weise werden die feinteiligen basischen Salze vorbefeuchtet eingerührt, z. B. indem man aus dem feinteiligen Salz unter Zugabe von Wasser, eine 10 - 80, vorzugsweise 20 - 70 Gew.-% Festkörper enthaltende Paste anrührt, die anschließend in die Ausgangsdispersion eingearbeitet wird. Gegebenenfalls können beim Zubereiten der Paste zusätzlich geringe Mengen an Netzmitteln eingearbeitet werden, wobei zweckmäßigerweise die gleichen Tenside wie bei der Emulsionspolymerisation zur Herstellung der Ausgangsdispersion eingesetzt werden.

Bezogen auf die Molzahl an in Form der Monomeren einpolymerisierten Säurefunktionen der Polymerisate A, wobei eine Anhydridgruppe als zwei Säuregruppen gezählt wird, werden vorteilhaft 30 bis 55 und besonders bevorzugt 40 bis 55 mol-% wenigstens eines der zweiwertigen Metalle Magnesium, Calcium oder Zink in Form seines Oxids, Hydroxids, Carbonats oder Hydrogencarbonats in die Ausgangsdispersion eingearbeitet. Die Einarbeitungstemperatur liegt vorzugsweise 20°C oder mehr oberhalb der Glasübergangstemperatur des Polymerisates A.

Die wäßrigen Polymerisatdispersionen neigen beim Stehen im allgemeinen nicht zur Bildung von Bodensätzen und ihre Herstellung ist kaum von Koagulatbildung begleitet. Ihre Verfilmungen sind in der Regel klar und weisen eine erhöhte innere Festigkeit auf. Letzteres äußert sich insbesondere in Form hoher Elastizitätsmodule, auch noch bei Temperaturen von bis zu 200°C, und in erhöhten Werten für die Reißfestigkeit. Auch die Wasserfestigkeit erreicht gute Werte. Bemerkenswerterweise weisen die Zink als zweiwertiges Metall enthaltenden erfindungsgemäßen wäßrigen Kunstharzdispersionen eine erhöhte Froststabilität auf.

Die wäßrigen Kunstharzdispersionen eignen sich insbesondere als Bindemittel in Vliesstoffen zur Herstellung von Dachbahnen, bei der die Vliesstoffe einem etwa 180 bis 200°C heißen Bitumenbad ausgesetzt sind. Bevorzugte Bindemittel in Vliesstoffen zur Herstellung von Dachbahnen sind dabei solche wäßrigen Polymerisatdispersionen, deren Polymerisate A eine Monomerenzusammensetzung der Gruppe I aufweisen und deren Glasübergangstemperatur -30 bis 20°C beträgt.

Zweckmäßigerweise werden die Polymerisatdispersionen bei ihrer Anwendung als Bindemittel in Vliesstoffen in verdünntem Zustand, in der Regel mit einem Gesamtfeststoffgehalt von 10 bis 20 Gew.-%, eingesetzt.

Vliesstoffe werden bekanntermaßen durch Verfestigung von Faservliesen hergestellt. Als Faservliese können Spinnvliese, doublierte, mit Faden verstärkte, genadelte, gewalzte und/oder geschrumpfte Vliese eingesetzt werden. Das Aufbringen der Bindemittel auf die Vliese kann in an sich üblicher Weise, durch Imprägnieren, Schaumimprägnieren, Sprühen, Pflatschen oder Bedrucken erfolgen. Nach dem Behandeln der Vliese mit den Bindemitteln und dem Abtrennen überschüssigen Bindemittels, z.B. durch Abquetschen, wird das imprägnierte Vlies im allgemeinen getrocknet und dann getempert. Das Trocknen kann beispielsweise im Verlauf von 1 bis 15 min bei 100 bis 200°C erfolgen. Man verwendet dabei im allgemeinen auch Bindemittel in einer solchen Menge an, daß der Gehalt des verfestigten Faservlieses an Polymerisat 10 bis 60 Gew.-%, bezogen auf die Menge des Fasermaterials beträgt.

Bindemittel mit besonders guten Naßfestigkeiten werden erhalten, wenn man die erfindungsgemäßen Polymerdispersionen, bevorzugt die der Zusammensetzungen II und III, insbesondere die der Zusammensetzung I, mit 0,5 bis 20, bevorzugt 2 bis 10 Gew.-Teilen, bezogen auf 100 Gew.-Teile des Polymerisates der wäßrigen Polymerdispersion, eines Methylolgruppen enthaltenden Resols oder Aminoplastes abmischt. Diese Bindemittel werden mit Vorteil für Vliesstoffe zur Herstellung von Dachbahnen verwendet. Die genannten Gew.-Teile sind auf das Trockengewicht des Polymerisates der Dispersion nach DIN 53 189 bezogen.

Resole und Aminoplaste sind ganz allgemein Kondensationsprodukte auf Basis von Carbonylverbindungen wie Formaldehyd mit bestimmten OH- bzw. NH-Gruppen enthaltenden Verbindungen.

Aminoplaste wie Melamin- oder Harnstoffharze sind allgemein bekannt, beispielsweise aus Encyclopedia of Polymer Science and Technology. Interscience Publishers 1965 Vol. 2 Seite 1 ff. oder Ullmanns Encyclopädie der technischen Chemie, Verlag Chemie, 4. Auflage, Band 7, S. 403 bis 423. Als Carbonylverbindung werden üblicherweise Acetaldehyd, Propionaldehyd, n-Butyraldehyd, iso-Butyraldehyd, Chloral, Aceton und insbesondere Formaldehyd verwendet. Als NH-gruppenhaltige Komponente kommen Carbonsäureamide, Urethane, Sulfonsäureamide, Thioharnstoff, Guanidin, Sulfurylamid, Cyanamid, Dicyanamid, Guanamine und insbesondere Harnstoff und Melamin in Betracht. Die Kondensation wird in bekannter weise säure- oder basekatalysiert üblicherweise zwischen 50 und 100°C durchgeführt. Bevorzugt werden wasserlösliche Produkte, die ein zahlenmittleres Molekulargewicht von unter 3000, bevorzugt 400 bis 1000 aufweisen, und freie Methylolgruppen enthalten.

Resole sind bevorzugt. Sie sind ebenfalls allgemein bekannt aus Encyclopedia of Polymer Science and Technology, Interscience Publishers 1969, Bd. 10, Seite 1 ff und Ullmanns Encyclopädie der technischen Chemie, Verlag Chemie, Band 18, 4. Auflage, Seite 245 bis 257. Als carbonylkomponenten kommen die oben genannten in Frage. OH-haltige Verbindungen sind Phenol, das durch $C_1$- bis $C_{18}$-Alkylgruppen substituiert sein kann wie p-t-Butylphenol, p-Isooctylphenol, p-Phenylphenol, p-Isononylphenol, Amylphenol, Cyclohexylphenol, Dodecylphenol, Cashew-öl und insbesondere Bisphenol A. Die Kondensation wird üblicherweise mit Basen oder Salzen katalysiert und bis zu zahlenmittleren Molekulargewichten von nicht mehr als 3000, bevorzugt 400 bis 1000 geführt, so daß freie Methylolgruppen vorliegen. Besonders bevorzugt wird ein Resol aus Bisphenol A und Formaldehyd im Verhältnis von 1:2 bis 1:4 mit ca. 3 bis 4 Methylolgruppen per Molekül in Form einer wäßrigen Lösung eingesetzt.

Die Einarbeitung der Resole oder Aminoplaste kann nach dem Fachmann bekannten Verfahren durchgeführt werden. Bevorzugt werden die Stoffe als wäßrige Lösungen mit der wäßrigen Dispersion vermischt. Dabei kann es angebracht sein, die Viskositäten von Dispersion und Lösung durch entsprechende Wasserzugabe anzugleichen, um das Vermischen zu vereinfachen. Die dabei entstehende Mischung hat bevorzugt einen pH-Wert von 6 bis 8, insbesondere 6,7 bis 7,7.

Bituminierte Dachbahnen auf Basis von Vliesstoffen, die mit den Bindemitteln hergestellt sind, weisen gute Gebrauchseigenschaften wie eine hohe Wärmestandfestigkeit auf.

Zu ihrer Herstellung werden, wie beispielsweise in US-A 4 518 658 beschrieben, im allgemeinen Vliesstoffe wie Spinnvliese auf Basis von Polyestern, beispielsweise Polyethylenterephtalat, sowie Glasfaservliese mit einem Gewicht von 120 bis 250 g/m² mit dem Bindemittel getränkt, so daß nach dem Trocknen auf 100 Gew.-Teile des Vliesstoffes im allgemeinen 10 bis 25 Gew.-Teile des Bindemittels kommen. Dem so behandelten Vliesstoff werden üblicherweise bei etwa 180 bis 200°C Bitumen und gegebenenfalls bis zu 5 Gew.-Teile, bezogen auf 100 Gew.-Teile Bitumen, an üblichen Hilfsstoffen wie Styrol-Butadien-Kautschuk, Butadien-Nitril-Kautschuk und anorganischen Füllstoffen zugegeben, so daß eine bituminierte Dachbahn mit einem Gewicht zwischen 2 und 8, speziell 3 - 6 kg/m2 entsteht.

Beispiele

Beispiel 1

Verschiedene Ausgangsdispersionen DA1 bzw. DA15 sowie Vergleichsausgangsdispersionen DAV1 bis DAV3

DA1: Eine Mischung aus 591,3 g Wasser, 4,2 g einer 25 gew.-%igen wäßrigen Lösung von Na-Vinylsulfonat, 2,6 g einer 40 gew.-%igen wäßrigen Lösung von Natriumtetradecylsulfonat und 84,3 g einer wäßrigen Monomerenemulsion M1 wurde auf die Polymerisationstemperatur von 85°C erhitzt, wobei dem Reaktionsgemisch bei Erreichen der Temperatur von 70°C zusätzlich 43,6 g einer Initiatorlösung von 12 g Natriumperoxidisulfat in 279 g Wasser zugesetzt wurden. Nach 15-minütiger Polymerisation bei 85°C wurden unter Aufrechterhaltung der Polymerisationstemperatur dem Reaktionsgemisch die verbliebenen Mengen der Initiatorlösung sowie der Monomerenemulsion M1 im Verlauf von 2 h über getrennte Zuläufe kontinuierlich zugeführt und anschließend noch 1 h nachpolymerisiert.

M1: 591,4 g Wasser
1185 g n-Butylacrylat
210 g Methacrylsäure
105 g Acrylnitril
1,8 g einer 25 gew.-%igen wäßrigen Lösung von Natriumvinylsulfonat
14,6 g einer 40 gew.-%igen wäßrigen Lösung von Natrium-n-tetradecylsulfonat.

DA2: Eine Mischung aus 592,6 g Wasser, 4,2 g einer 25 gew.-%igen wäßrigen Lösung von Natriumvinylsulfonat und 84,3 g einer wäßrigen Monomerenemulsion M2 wurde auf die Polymerisationstemperatur von 85°C erhitzt, wobei dem Reaktionsgemisch bei Erreichen der Temperatur von 70°C zusätzlich 43,6 g einer Initiatorlösung von 12 g Natriumperoxidisulfat in 279 g Wasser zugesetzt wurden. Nach 15-minütiger Polymerisation bei 85°C wurden unter Aufrechterhaltung der Polymerisationstemperatur dem Reaktionsgemisch die verbliebenen Mengen der Initiatorlösung sowie der Monomerenemulsion M2 im Verlauf von 2 h über getrennte Zuläufe kontinuierlich zugeführt und anschließend noch 1 h nachpolymerisiert.

M2: 590,2 g Wasser
1185 g n-Butylacrylat
105 g Acrylnitril
210 g Methacrylsäure
1,8 g einer 25 gew.-%igen wäßrigen Lösung von Natriumvinylsulfonat
17,2 g einer 40 gew.-%igen wäßrigen Lösung von Natrium-n-tetradecylsulfonat.

DA3: Eine Mischung aus 592,6 g Wasser, 4,2 g einer 25 gew.-%igen wäßrigen Lösung von Natriumvinylsulfonat und 84,9 g einer wäßrigen Monomerenemulsion M3 wurde auf die Polymerisationstemperatur von 85°C erhitzt, wobei dem Reaktionsgemisch bei Erreichen der Temperatur von 70°C zusätzlich 43,6 g einer Initiatorlösung von 12 g Natriumperoxidisulfat in 279 g Wasser zugesetzt wurden. Nach 15-minütiger Polymerisation bei 85°C wurden unter Aufrechterhaltung der Polymerisationstemperatur dem Reaktionsgemisch die verbliebenen Mengen der Initiatorlösung sowie der Monomerenemulsion M3 im Verlauf von 2 h über getrennte Zuläufe kontinuierlich zugeführt und anschließend noch 1 h nachpolymerisiert.

M3: 530,2 g Wasser
1185 g n-Butylacrylat
105 g Acrylnitril
210 g Methacrylsäure
1,8 g einer 25 gew.-%igen wäßrigen Lösung von Natriumvinylsulfonat
17,2 g einer 40 gew.-%igen wäßrigen Lösung von Natrium-n-tetradecylsulfonat.
75 g einer 20 gew.-%igen wäßrigen Lösung von ethoxyliertem para-n-Octylphenol (EO-Grad: 25)

DAV1: Eine Mischung aus 592,6 g Wasser, 4,2 g einer 25 gew.-%igen wäßrigen Lösung von Natriumvinylsulfonat und 84,7 g einer wäßrigen Monomerenemulsion MV1 wurde auf die Polymerisationstemperatur von 85°C erhitzt, wobei dem Reaktionsgemisch bei Erreichen der Temperatur von 70°C zusätzlich 43,6 g einer Initiatorlösung von 12 g Natriumperoxidisulfat in 279 g Wasser zugesetzt wurden. Nach 15-minütiger Polymerisation bei 85°C wurden unter Aufrechterhaltung der Polymerisationstemperatur dem Reaktionsgemisch die verbliebenen Mengen der Initiatorlösung sowie der Monomerenemulsion MV1 im Verlauf von 2 h über getrennte Zuläufe kontinuierlich zugeführt und anschließend noch 1 h nachpolymerisiert.

MV1: 538,2 g Wasser
1185 g n-Butylacrylat
105 g Acrylnitril
210 g Methacrylsäure
1,8 g einer 25 gew.-%igen wäßrigen Lösung von Natriumvinylsulfonat
3,7 g einer 40 gew.-%igen wäßrigen Lösung von Natrium-n-tetradecylsulfonat.
75 g einer 20 gew.-%igen wäßrigen Lösung von ethoxyliertem para-n-Octylphenol (EO-Grad: 25)

DA4: Eine Mischung aus 644 g Wasser und 21,4 g einer 28 gew.-%igen wäßrigen Lösung des Natriumsalzes des sulfatierten Derivates von ethoxyliertem n-Tetradecanol (EO-Grad: 2,5) wurde auf die Polymerisationstemperatur von 85°C erhitzt, wobei dem Reaktionsgemisch bei Erreichen der Temperatur von 70°C zusätzlich 24,9 g einer Initiatorlösung von 9,6 g Natriumperoxidisulfat in 240 g Wasser zugesetzt wurden. 5 Minuten später wurden unter Aufrechterhaltung der Temperatur dem Reaktionsgemisch die verbliebenen Mengen der Initiatorlösung sowie die Monomerenemulsion M4 im Verlauf von 2 h über getrennte Zuläufe kontinuierlich zugeführt und anschließend noch 1 h nachpolymerisiert.

M4: 808 g Wasser
486 g Styrol
420 g n-Butylacrylat
120 g Methylmethacrylat
174 g Methacrylsäure
128,5 g einer 28 gew.-%igen wäßrigen Lösung des Natriumsalzes des sulfatierten Derivates von ethoxyliertem n-Tetradecanol (EO-Grad: 2,5)

DA5: Eine Mischung aus 659,4 g Wasser und 106,8 g einer wäßrigen Monomerenemulsion M5 wurde auf die Polymerisationstemperatur von 85°C erhitzt, wobei dem Reaktionsgemisch bei Erreichen der Temperatur von 70°C zusätzlich 24,9 g einer Initiatorlösung von 9,6 g Natriumperoxidisulfat in 240 g Wasser zugesetzt wurden. Nach 15-minütiger Polymerisation bei 85°C wurden unter Aufrechterhaltung der Polymerisationstemperatur dem Reaktionsgemisch die verbliebenen Mengen der Initiatorlösung sowie der Monomerenemulsion M5 im Verlauf von 2 h über getrennte Zuläufe kontinuierlich zugeführt und anschließend noch 1 h nachpolymerisiert.

M5: 808 g Wasser
486 g Styrol
420 g n-Butylacrylat
120 g Methylmethacrylat
174 g Methacrylsäure
128,5 g einer 28 gew.-%igen wäßrigen Lösung des Natriumsalzes des sulfatierten Derivates von ethoxyliertem n-Tetradecanol (EO-Grad: 2,5)

DA6: Eine Mischung aus 330 g Wasser und 53,1 g einer wäßrigen Monomerenemulsion M6 wurde auf die Polymerisationstemperatur von 85°C erhitzt, wobei dem Reaktionsgemisch bei Erreichen der Temperatur von 70°C zusätzlich 12,4 g einer Initiatorlösung von 4,8 g Natriumperoxidisulfat in 120 g Wasser zugesetzt wurden. Nach 15-minütiger Polymerisation bei 85°C wurden unter Aufrechterhaltung der Polymerisationstemperatur dem Reaktionsgemisch die verbliebenen Mengen der Initiatorlösung sowie der Monomerenemulsion M6 im Verlauf von 2 h über getrennte Zuläufe kontinuierlich zugeführt und anschließend noch 1 h nachpolymerisiert.

M6: 397,4 g Wasser
243 g Styrol
210 g n-Butylacrylat
60 g Methylmethacrylat
87 g Methacrylsäure
60 g einer 20 gew.-%igen wäßrigen Lösung von ethoxyliertem para-n-Octylphenol (EO-Grad: 25)
6,4 g einer 28 gew.-%igen wäßrigen Lösung des Natriumsalzes des sulfonierten Derivates von ethoxyliertem n-Tetradecanol (EO-Grad: 2,5)

DA7: Eine Mischung aus 330 g Wasser und 53,1 g einer wäßrigen Monomerenemulsion M7 wurde auf die Polymerisationstemperatur von 85°C erhitzt, wobei dem Reaktionsgemisch bei Erreichen der Temperatur von 70°C zusätzlich 12,4 g einer Initiatorlösung von 4,8 g Natriumperoxidisulfat in 120 g Wasser zugesetzt wurden. Nach 15-minütiger Polymerisation bei 85°C wurden unter Aufrechterhaltung der Polymerisationstemperatur dem Reaktionsgemisch die verbliebenen Mengen der Initiatorlösung sowie der Monomerenemulsion M7 im Verlauf von 2 h über getrennte Zuläufe kontinuierlich zugeführt und anschließend noch 1 h nachpolymerisiert.

M7: 398,9 g Wasser
243 g Styrol
210 g n-Butylacrylat
60 g Methylmethacrylat
87 g Methacrylsäure
60 g einer 20 gew.-%igen wäßrigen Lösung von ethoxyliertem para-n-Octylphenol (EO-Grad: 25)
4,2 g einer 28 gew.-%igen wäßrigen Lösung des Natriumsalzes des sulfatierten Derivates von ethoxyliertem n-Tetradecanol (EO-Grad: 2,5)

DAV2: Eine Mischung aus 330 g Wasser und 53,1 g einer wäßrigen Monomerenemulsion MV2 wurde auf die Polymerisationstemperatur von 85°C erhitzt, wobei dem Reaktionsgemisch bei Erreichen der Temperatur von 70°C zusätzlich 12,4 g einer Initiatorlösung von 4,8 g Natriumperoxidisulfat in 120 g Wasser zugesetzt wurden. Nach 15-minütiger Polymerisation bei 85°C wurden unter Aufrechterhaltung der Polymerisationstemperatur dem Reaktionsgemisch die verbliebenen Mengen der Initiatorlösung sowie der Monomerenemulsion MV2 im Verlauf von 2 h über getrennte Zuläufe kontinuierlich zugeführt und anschließend noch 1 h nachpolymerisiert.

MV2: 400,5 g Wasser
243 g Styrol

210 g n-Butylacrylat
60 g Methylmethacrylat
87 g Methacrylsäure
60 g einer 20 gew.-%igen wäßrigen Lösung von ethoxyliertem para-n-Octylphenol (EO-Grad: 25)
2,1 g einer 28 gew.-%igen wäßrigen Lösung des Natriumsalzes des sulfatierten Derivates von ethoxyliertem n-Tetradecanol (EO-Grad: 2,5)

DA8: Eine Mischung aus 591,5 g Wasser, 4,2 g einer 25 gew.-%igen wäßrigen Lösung von Natriumvinylsulfonat und 84,6 g einer wäßrigen Monomerenemulsion M8 wurde auf die Polymerisationstemperatur von 85°C erhitzt, wobei dem Reaktionsgemisch bei Erreichen der Temperatur von 70°C zusätzlich 43,6 g einer Initiatorlösung von 12 g Natriumperoxidisulfat in 279 g Wasser zugesetzt wurden. Nach 15-minütiger Polymerisation bei 85°C wurden unter Aufrechterhaltung der Polymerisationstemperatur dem Reaktionsgemisch die verbliebenen Mengen der Initiatorlösung sowie der Monomerenemulsion M8 im Verlauf von 2 h über getrennte Zuläufe kontinuierlich zugeführt und anschließend noch 1 h nachpolymerisiert.

M8: 583,9 g Wasser
1185 g n-Butylacrylat
105 g Acrylnitril
210 g Methacrylsäure
1,8 g einer 25 gew.-%igen wäßrigen Lösung von Natriumvinylsulfonat
30 g einer 40 gew.-%igen wäßrigen Lösung von Natrium-n-tetradecylsulfonat.

DA9: Wie DA1, jedoch wurde an Stelle der wäßrigen Monomerenemulsion M1 eine Monomerenemulsion M9 eingesetzt.

M9: 591,5 g Wasser
1290 g n-Butylacrylat
210 g Methacrylsäure
1,8 g einer 25 gew.-%igen wäßrigen Lösung von Natriumvinylsulfonat
14,6 g einer 40 gew.-%igen wäßrigen Lösung von Natrium-n-tetradecylsulfonat.

DA10: Wie DA1, jedoch wurde an Stelle der wäßrigen Monomerenemulsion M1 eine Monomerenemulsion M10 eingesetzt.

M10: 591,4 g Wasser
945 g n-Butylacrylat
360 g Acrylnitril
150 g Methacrylsäure
45 g Methacrylamid
1,8 g einer 25 gew.-%igen wäßrigen Lösung von Natriumvinylsulfonat
14,6 g einer 40 gew.-%igen wäßrigen Lösung von Natrium-n-tetradecylsulfonat.

DA11: Wie DA1, jedoch wurde an Stelle der wäßrigen Monomerenemulsion M1 eine Monomerenemulsion M11 eingesetzt.

M11: 591,2 g Wasser
840 g n-Butylacrylat
105 g Acrylnitril
375 g Methacrylsäure
180 g Methylacrylat
1,8 g einer 25 gew.-%igen wäßrigen Lösung von Natriumvinylsulfonat
14,6 g einer 40 gew.-%igen wäßrigen Lösung von Natrium-n-tetradecylsulfonat.

DA12: Wie DA1, jedoch wurde an Stelle der wäßrigen Monomerenemulsion M1 eine Monomerenemulsion M12 eingesetzt und an Stelle von 12 g Natriumperoxidisulfat wurden 21 g Natriumperoxidisulfat verwendet.

M12: 591,5 g Wasser
840g n-Butylacrylat

105 g Acrylnitril

175,5 g Acrylsäure

379,5g Methylmethacrylat

1,8 g einer 25 gew.-%igen wäßrigen Lösung von Natriumvinylsulfonat

6 gtert.-Dodecylmercaptan 14,6 g einer 40 gew.-%igen wäßrigen Lösung von Natrium-n-tetradecylsulfonat.

DA13: Wie DA1, jedoch wurde an Stelle der wäßrigen Monomerenemulsion M1 eine Monomerenemulsion M13 eingesetzt.

M13: 591,4 g Wasser

810 g n-Butylacrylat

105 g Acrylnitril

210 g Methacrylsäure

375 g Vinylacetat

1,8 g einer 25 gew.-%igen wäßrigen Lösung von Natriumvinylsulfonat

14,6 g einer 40 gew.-%igen wäßrigen Lösung von Natrium-n-tetradecylsulfonat.

DA14: Wie DA1, jedoch wurde an Stelle der wäßrigen Monomerenemulsion M1 eine Monomerenemulsion M14 eingesetzt.

M14: 591,2 g wasser

1320 g n-Butylacrylat

105 g Acrylnitril

75 g Methacrylsäure

1,8 g einer 25 gew.-%igen wäßrigen Lösung von Natriumvinylsulfonat

14,6 g einer 40 gew.-%igen wäßrigen Lösung von Natrium-n-tetradecylsulfonat.

DA15: Eine Mischung aus 136 kg Wasser, 1,33 kg einer 45 gew.-%igen wäßrigen Lösung eines Gemisches von Natrium-Salzen von 2-fach sulfonierten Mono- und Didodecyldiphenylethern, 5,6 kg einer Initiatorlösung von 4 kg Natriumperoxidisulfat in 56 kg Wasser und 59 kg einer Monomerenemulsion M15 wird auf die Polymerisationstemperatur von 90°C erhitzt. Nach 20-minütiger Polymerisation bei 90°C wurden unter Aufrechterhaltung der Polymerisationstemperatur dem Reaktionsgemisch die verbliebenen Mengen der Initiatorlösung sowie der Monomerenemulsion M15 im Verlauf von 5 h über getrennte Zuläufe kontinuierlich zugeführt und anschließend noch 2 h nachpolymerisiert.

M15: 145,2 kg Wasser

40,0 kg einer 3 gew.-%igen wäßrigen Lösung von Natriumpyrophosphat

12 kg Methacrylamid

200 kg Butadien

148,0 kg Acrylsäure

7,2 kg tert.-Dodecylmercaptan

1,8 kg einer 15 gew.-%igen wäprigen Lösung von Natrium-n-dodecylsulfat

1,8 kg einer 45 gew.-%igen wäßrigen lösung eines Gemisches von Natriumsalzen von 2-fach sulfonierten Mono- und Didodecyldiphenylethern

DAV3: wie DA1, jedoch wurde anstelle der wäßrigen Monomeremulsion M1 die Monomeremulsion MV3 eingesetzt.

MV3: 421,5 g Wasser

1185 g n-Butylacrylat

210 g Methacrylsäure

75 g Acrylnitril

200 g einer 15 gew.-%igen wäßrigen Lösung von N-Methylolmethacrylamid

Geringfügige Anteile Koagulat wurden von den so erhaltenen wäßrigen Polymerisatdispersionen durch Filtrieren (Durchmesser der Öffnungen: $1{,}2 \cdot 10^{-4}$ m) abgetrennt.

Tabelle 1 gibt einen überblick über die wesentlichen Merkmale der Ausgangsdispersionen DA1 bis DA15 sowie DAV1 und DAV2. Die Bestimmung der mittleren Teilchengröße $\bar{d}$ der jeweiligen dispersen Phase nach der Methode der dynamischen Lichtstreuung wurde mit einem Autosizer IIC der Fa. Malvern Instruments Ltd. Spring Lane South, Worcestershire WR 14 1AQ, England durchgeführt. Die Abkürzung FG steht für Feststoffgehalt und Tg für Glastemperatur. Die Tg-Werte wurden in allen Fällen nach Fox berechnet. Als Tg-Werte der Homopolymerisate von Na-Vinylsulfonat und N-Methylolmethacrylamid wurden zum Zwecke der Berechnung 0°C eingesetzt.

Tabelle 1

|  | FG (Gew.-%) | LD-Wert | $\bar{d}$ (nm) | Tg (°C) |
|---|---|---|---|---|
| Ausgangsdispersion | | | | |
| DA1 | 50 | 77 | 178,9 | - 18 |
| DA2 | 50 | 55 | 291,5 | - 18 |
| DA3 | 50,5 | 47 | 336,0 | - 18 |
| DAV1 | 49,9 | 6 | 473,6 | - 18 |
| DA4 | 40,9 | 96 | 66,9 | 42 |
| DA5 | 40,5 | 86 | 108,3 | 42 |
| DA6 | 40,8 | 41 | 204,5 | 42 |
| DA7 | 40,3 | 32 | 278,0 | 42 |
| DAV2 | 39,9 | 9 | 439,7 | 42 |
| DA8 | 50,1 | 66 | - | - 5 |
| DA9 | 49,7 | 77 | - | - 26 |
| DA10 | 49,6 | 73 | - | 0 |
| DA11 | 50,1 | 68 | 203,3 | 7 |
| DA12 | 50,6 | 71 | - | 6 |
| DA13 | 50,3 | 74 | 185,9 | 0 |
| DA14 | 49,9 | 77 | 172,3 | - 31 |
| DA15 | 49,9 | 60 | - | - 13 |
| DAV3 | 50,3 | 79 | 169,1 | - 18 |

Beispiel 2

Zinkoxid enthaltende Polymerisatdispersionen DE1 bis DE5 sowie Vergleichsdispersionen DEV1 bis DEV6

Durch Einrühren von 375 g Wasser in 625 g ZnO (Qualität Rotsiegel der Metall und Farbwerke GmbH Grillo Werke AG, D-3380 Goslar, BET-Oberfläche 3 bis 5 m$^2$) wurde eine wäßrige ZnO-Paste hergestellt, die in bestimmten Mengen bestimmten Ausgangsdispersionen zugegeben und bei bestimmten Temperaturen über verschiedene Zeiträume in diese Ausgangsdispersionen eingerührt wurde.

Anschließend wurde beim Einrühren der ZnO-Paste gebildetes Koagulat durch Filtration (Durchmesser der Öffnungen: 1,2·10$^{-4}$ m) abgetrennt, bei 60°C getrocknet und gravimetrisch bestimmt. Die so erhaltene Dispersion wurde danach 1 Woche sich selbst überlassen und sodann visuell auf Bodensatz überprüft und verfilmt.

| DE1: | Ausgangsdisperison : | 143,1 g DA1 |
|---|---|---|
| | ZnO-Paste : | 6,9 g |
| | Temperatur : | 25°C |
| | Dauer des Einrührens : | 2 h |
| | Koagulat : | 0,0107 g |

Die Dispersion DE1 bildete nach einwöchigem Stehen keinen Bodensatz und ergab beim Verfilmen klare Filme.

| DE2: | Ausgangsdisperison : | 136,6 g DA2 |
|---|---|---|
| | ZnO-Paste : | 6,5 g |
| | Temperatur : | 25°C |
| | Dauer des Einrührens : | 2 h |
| | Koagulat : | 0,0054 g |

Die Dispersion DE2 bildete nach einwöchigem Stehen keinen Bodensatz und ergab beim Verfilmen klare Filme.

| DE3: | Ausgangsdisperison : | 131,7 g DA3 |
|---|---|---|
| | ZnO-Paste : | 6,3 g |
| | Temperatur : | 25°C |
| | Dauer des Einrührens : | 2 h |
| | Koagulat : | 0,0277 g |

Die Dispersion DE3 bildete nach einwöchigem Stehen keinen Bodensatz und ergab beim Verfilmen klare Filme.

| DEV1: | Ausgangsdisperison : | 142,3 g DAV1 |
|---|---|---|
| | ZnO-Paste : | 6,7 g |
| | Temperatur : | 25°C |
| | Dauer des Einrührens : | 2 h |
| | Koagulat : | 0,0056 g |

Die Dispersion DEV1 bildete nach einwöchigem Stehen Bodensatz.

| DE4: | Ausgangsdisperison : | 137,5 g DA5 |
|---|---|---|
| | ZnO-Paste : | 5,5 g |
| | Temperatur : | 70°C |
| | Dauer des Einrührens : | 2 h |
| | Koagulat : | 0,0161 g |

Die Dispersion DE4 bildete nach einwöchigem Stehen keinen Bodensatz und ergab beim Verfilmen klare Filme.

| DE5: | Ausgangsdisperison : | 130,8 g DA6 |
|---|---|---|
| | ZnO-Paste : | 5,2 g |
| | Temperatur : | 70°C |
| | Dauer des Einrührens : | 2 h |
| | Koagulat : | 0,0010 g |

Die Dispersion DE5 bildete nach einwöchigem Stehen keinen Bodensatz und ergab beim Verfilmen klare Filme.

| DEV2: | Ausgangsdisperison : | 143,4 g DAV2 |
|---|---|---|
| | ZnO-Paste : | 5,6 g |
| | Temperatur : | 25°C |
| | Dauer des Einrührens : | 4 h |
| | Koagulat : | 0,0094 g |

Die Dispersion DEV2 zeigte nach einwöchigem Stehen erhöhten Bodensatz und bildete trübe Filme.

| DEV3: | Ausgangsdisperison : | 139 g DAV2 |
|---|---|---|
| | ZnO-Paste : | 5,5 g |
| | Temperatur : | 70°C |
| | Dauer des Einrührens : | 2 h |
| | Koagulat : | 0,00631 g |

Die Dispersion DEV3 zeigte nach einwöchigem Stehen Bodensatz und bildete trübe Filme.

| DEV4: | Ausgangsdisperison : | 140,6 g DA5 |
|---|---|---|
| | ZnO-Paste : | 5,6 g |
| | Temperatur : | 25°C |

(fortgesetzt)

| | Dauer des Einrührens : | 4 h |
|---|---|---|
| | Koagulat : | 0,0387 g |

Die Dispersion DEV4 zeigte nach einwöchigem Stehen erhöhten Bodensatz und bildete trübe Filme.

| DEV5: | Ausgangsdisperison : | 132,7 g DA6 |
|---|---|---|
| | ZnO-Paste : | 5,3 g |
| | Temperatur : | 25°C |
| | Dauer des Einrührens : | 4 h |
| | Koagulat : | 0,0065 g |

Die Dispersion DEV5 zeigte nach einwöchigem Stehen Bodensatz und bildete trübe Filme.

| DEV6: | Ausgangsdisperison : | 124,0 g DA7 |
|---|---|---|
| | ZnO-Paste : | 5,0 g |
| | Temperatur : | 25°C |
| | Dauer des Einrührens : | 4 h |
| | Koagulat : | 0,0078 g |

Die Dispersion DEV6 zeigte nach einwöchigem Stehen Bodensatz und bildete trübe Filme.

Beispiel 3

Fließverhalten und Froststabilität

a) Meßmethoden

Die Viskosität wurde nach DIN 53019 mit einem Rotations-Viskosimeter (Contraves - Rheometer 7978 STV FCN, Contraves AG Zürich) bestimmt. Verwendet wurden die Meßbecher-Nr. 25 bzw. 45: gemessen wurde - sofern möglich - in Geschwindigkeitsstufe I, II und III des Rheometers.

Zur Bestimmung der Froststabilität werden 400 g Dispersion in 500 ml fassende Polyethylenflaschen gefüllt. Dann wird die Dispersion in einer Tiefkühltruhe 8 h bei -50°C eingefroren. Anschließend wird 16 h lang aufgetaut und die Dispersion beurteilt. Maximal drei Zyklen werden durchlaufen.

b) Test

Fließverhalten:

In 100 g der Ausgangsdispersion DA 1 wurden 5,3 g der ZnO-Paste aus Beispiel 2 binnen 2 h bei Raumtemperatur eingerührt. Man erhält eine niedrigviskose Dispersion mit einem Feststoffgehalt von 50 Gew.-%. Anschließend wird diese Dispersion mit Wasser unter Rühren auf einen Feststoffgehalt von ca. 40 Gew.-% verdünnt und die Viskosität gemessen:

| | | | Viskosität/mPas | | |
|---|---|---|---|---|---|
| FG/Gew.-% | pH | Becher-Nr. | Stufe I | II | III |
| 50 | 5,8 | 45 | - | 21 | 17 |
| 40 | 6,0 | 45 | - | - | 8 |
| 50[1] | 3,0[1] | 45[1] | - | 27[1] | 22[1] |

1) Vergleichswerte der Ausgangsdispersion DA1 (ohne Metall)

Froststabilität

Die Ansätze mit unterschiedlichem Feststoffgehalt wurden auf ihre Froststabilität geprüft. Bei der Dispersion mit einem Feststoffgehalt von 50 Gew.-% steigt die Viskosität an, die Dispersion läßt sich aber wieder Aufrühren. Bei einem Feststoffgehalt von 40 Gew.-% bleibt die Dispersion niedrigviskos.

Die Dispersion DA1 (ohne Metall) koaguliert dagegen nach dem 1. Zyklus.

Beispiel 4

Prüfung der inneren Festigkeit von Vliesstoffen bei erhöhter Temperatur, die erfindungsgemäß verwendete Polymerisatdispersionen oder Vergleichsdispersionen als Bindemittel enthalten.

a) Herstellung der Prüfstreifen

Auf ein mechanisch vorverfestigtes Polyester-Spinnvlies mit einem Flächengewicht von 200 g/m$^2$, das als Rohvlies für bituminierte Dachbahnen geeignet ist, wurde die Polymerisatdispersion durch Tränken aufgebracht und anschließend zwischen zwei gegenläufigen Walzen das überschüssige Bindemittel abgetrennt sowie das bindemittelhaltige Rohvlies 10 min einer Temperatur von 170 bis 200°C ausgesetzt. Der Gegendruck der Walzen wurde so gewählt, daß der resultierende Vliesstoff, aus dem anschließend rechteckige Prüfstreifen einer Länge von 320 mm und einer Breite von 50 mm ausgeschnitten wurden, pro m$^2$ 40 g Trockenmasse an Bindemittel enthielt.

b) Durchführung der Prüfung

Die Prüfstreifen wurden an ihren schmalen Seiten (50 mm) zwischen zwei gegenüberliegende Klemmen eingespannt, von denen eine feststehend und die andere beweglich angeordnet war. An der beweglich angeordneten Klemme war ein Weggeber angebracht und über eine Umlenkrolle ein Gewicht der Masse 8 kg befestigt.

Die so eingespannten Prüfstreifen wurden 3 min einer Temperatur von 176°C ausgesetzt und als Maß für die innere Festigkeit die Dehnung (Endlänge - Anfangslänge) sowie der Einsprung (Breite der Prüfstreifen an der schmalsten Stelle), jeweils in mm, bestimmt.

c) Verwendete Polymerisatdispersionen und Meßwerte

- In 100 g DA1 wurden während 2 h bei 25°C 5,3 g der ZnO-Paste aus Beispiel 2 eingerührt. Anschließend wurde die erhaltene Dispersion auf einen Gesamtfeststoffgehalt von 10 Gew.-% verdünnt.
  Dehnung :30,7 mm
  Einsprung:29,3 mm

- In 100 g DA1 wurden während 2 h bei 25°C eine Aufschlämmung von 2,2 g Calciumoxid in 5 g Wasser eingerührt. Anschließend wurde die erhaltene Dispersion auf einen Gesamtfeststoffgehalt von 10 Gew.-% verdünnt.
  Dehnung:41,9 mm
  Einsprung:23,0 mm

- In 100 g DA1 wurden während 2 h bei 25°C eine Aufschlämmung von 1,6 g Magnesiumoxid in 5 g Wasser eingerührt. Anschließend wurde die erhaltene Dispersion auf einen Gesamtfeststoffgehalt von 10 Gew.-% verdünnt.
  Dehnung:38,1 mm
  Einsprung:27,0 mm

- In 100 g DA8 wurde während 2 h bei 25°C eine Aufschlämmung von 1,4 g MgO in 5 g Wasser eingerührt. Anschließend wurde die erhaltene Dispersion auf einen Gesamtfeststoffgehalt von 10 Gew.-% verdünnt.
  Dehnung :38,9 mm
  Einsprung:21 mm

- In 100 g DA8 wurde während 2 h bei 25°C eine Aufschlämmung von 1,1 g CaO in 5 g Wasser eingerührt. Anschließend wurde die erhaltene Dispersion auf einen Gesamtfeststoffgehalt von 10 Gew.-% verdünnt.
  Dehnung :35,7 mm
  Einsprung:22 mm

- In 100 g DA4 wurden während 2 h bei 75°C 4,5 g der ZnO-Paste aus Beispiel 2 eingerührt. Anschließend wurde die erhaltene Dispersion auf einen Gesamtfeststoffgehalt von 10 Gew.-% verdünnt.
  Dehnung :35,8 mm
  Einsprung:23 mm

- In 100 g DA1 wurden während 2 h bei 25°C 4,4 g $ZnCO_3 \cdot Zn(OH)_2$ eingerührt. Anschließend wurde die erhaltene Dispersion auf einen Gesamtfeststoffgehalt von 10 Gew.-% verdünnt.
  Dehnung :33,2 mm
  Einsprung:26,5 mm

- In 100 g DA12 wurden während 2 h bei 75°C 5,4 g der ZnO-Paste aus Beispiel 2 eingerührt. Anschließend wurde die erhaltene Dispersion auf einen Gesamtfeststoffgehalt von 10 Gew.-% verdünnt.
  Dehnung :46 mm
  Einsprung:20,5 mm

- In 100 g DA9 wurden während 2 h bei 25°C 5,3 g der ZnO-Paste aus Beispiel 2 eingerührt. Anschließend wurde die erhaltene Dispersion auf einen Gesamtfeststoffgehalt von 10 Gew.-% verdünnt.
  Dehnung :40,5 mm
  Einsprung:22 mm

- In 100 g DA13 wurden während 2 h bei 30°C 1,6 g der ZnO-Paste aus Beispiel 2 eingerührt. Anschließend wurde die erhaltene Dispersion auf einen Gesamtfeststoffgehalt von 10 Gew.-% verdünnt.
  Dehnung :35,7 mm
  Einsprung:25,5 mm

- In 100 g DA11 wurden während 2 h bei 75°C 5,7 g der ZnO-Paste aus Beispiel 2 eingerührt. Anschließend wurde die erhaltene Dispersion auf einen Gesamtfeststoffgehalt von 10 Gew.-% verdünnt.
  Dehnung: 35 mm
  Einsprung:28,5 mm

- In 100 g DA14 wurden während 2 h bei 25°C 1,9 g der ZnO-Paste aus Beispiel 2 eingerührt. Anschließend wurde die erhaltene Dispersion auf einen Gesamtfeststoffgehalt von 10 Gew.-% verdünnt.
  Dehnung :45,9 mm
  Einsprung:16,5 mm

- In 100 g DA10 wurden während 2 h bei 75°C 3,7 g der ZnO-Paste aus Beispiel 2 eingerührt. Anschließend wurde die erhaltene Dispersion auf einen Gesamtfeststoffgehalt von 10 Gew.-% verdünnt.
  Dehnung :38,3 mm
  Einsprung:25,5 mm

In allen Fällen zeigten die vor Verdünnung erhaltenen Dispersionen nach einwöchigem Stehen keinen Bodensatz und ergeben beim Verfilmen klare Filme.

- Zum Vergleich wurde DAV3 verwendet, die zuvor ebenfalls auf einen Feststoffgehalt von 10 Gew.-% verdünnt wurde.
  Dehnung :53 mm
  Einsprung:14,5 mm

Beispiel 5

Prüfung der Wasserfestigkeit von Vliesstoffen, die die erfindungsgemäß verwendeten Polymerdispersionen enthalten.

DE 6: Eine Mischung aus 591.5 g Wasser, 2,6 g einer 40 gew.-%igen wäßrigen Lösung von Natriumtetradecylsulfonat, 4,2 g einer 25 gew.-%igen wäßrigen Lösung von Natriumvinylsulfonat und 84,3 g einer wäßrigen Monomerenemulsion M16 wurde auf die Polymerisationstemperatur von 85°C erhitzt, wobei dem Reaktionsgemisch bei Erreichen der Temperatur von 70°C zusätzlich 43,6 g einer Initiatorlösung von 12 g Natriumperoxidisulfat in 279 g Wasser zugesetzt wurde. Nach 15 minütiger Polymerisation bei 85°C wurden unter Aufrechterhaltung der Polymerisationstemperatur dem Reaktionsgemisch die verbliebenen Mengen der Initiatorlösung sowie der Monomeremulsion M16 im Verlauf von 2 Stunden über getrennte Zuläufe kontinuierlich zugeführt und anschließend noch eine Stunde nachpolymerisiert.
Feststoffgehalt der Dispersion 49,4 Gew.-%, LD-Wert 77 %, $\bar{d}$ = 170,4 nm.

M16: 591.5 g Wasser
1170 g n-Butylacrylat
210 g Methacrylsäure
105 g Acrylnitril
15 g Acrylamidoglykolsäure
1,8 g einer 25 gew.%igen wäßrigen Lösung von Natriumvinylsulfonat
14,6 g einer 40 gew.-%igen wäßrigen Lösung von Natrium-n-tetra-decylsulfonat In 100 g dieser Dispersion wurden 4,7 g der in Beispiel 2 genannten ZnO-Paste bei 25°C eingerührt entsprechend 44 mol%.

DE7: Man geht wie in DE 6 beschrieben vor, allerdings wird die Monomerenemulsion M17 der folgenden Zusammensetzung verwendet:

M17: 591.5 g Wasser
1140 g n-Butylacrylat
210 g Methacrylsäure
105 g Acrylnitril
45 g Acrylamidoglykolsäure
1,8 g einer 25 gew.-%igen wäßrigen Lösung von Natriumvinylsulfonat
14,6 g einer 40 gew.-%igen wäßrigen Lösung von Natrium-n-tetra-decylsulfonat Feststoffgehalt der Dispersion 49,5 Gew.-%, LD-Wert 49 %, $\bar{d}$ = 310,8 mm
4,7 g der ZnO-Paste wurden wie bei DE6 beschrieben eingerührt.

DE8: Man geht wie in DE6 beschrieben vor, allerdings wird die Monomeremulsion M18 der folgenden Zusammensetzung verwendet:

M18: 506,3 g Wasser
1185 g n-Butylacrylat
210 g Methacrylsäure
90 g Acrylnitril
100 g einer 15 gew.-%igen wäßrigen Lösung von N-Methylolmethacrylamid
1,8 g einer 25 gew.-%igen wäßrigen Lösung von Natriumvinylsulfonat
14,6 g einer 40 gew.-%igen wäßrigen Lösung von Natrium-n-tetra-decylsulfonat Feststoffgehalt der Dispersion 49,7 Gew.-%, LD-Wert 74 %, $\bar{d}$ = 184,1 nm.
4,7 g der ZnO-Paste wurden wie bei DE6 beschrieben eingerührt.

DE9: Man geht wie in DE6 beschrieben vor, allerdings wird die Monomerenemulsion M19 der folgenden Zusammensetzung verwendet:

M19: 421,3 g Wasser
1185 g n-Butylacrylat
210 g Methacrylsäure
75 g Acrylnitril
200 g einer 15 gew.-%igen wäßrigen Lösung von N-Methylolmethacrylamid
1,8 g einer 25 gew.-%igen wäßrigen Lösung von Natriumvinylsulfonat
14,6 g einer 40 gew.-%igen wäßrigen Lösung von Natrium-n-tetra-decylsulfonat Feststoffgehalt der Dispersion 49,5 Gew.-%, LD-Wert 76 %, $\bar{d}$ = 166,5 nm.
4,7 g der ZnO-Paste wurden wie bei DE6 beschrieben eingerührt.

DE10: Man geht wie in DE6 beschrieben vor, allerdings wird die Monomerenemulsion M20 der folgenden Zusammensetzung verwendet:

M20: 294 g Wasser
1132,5 g n-Butylacrylat
210 g Methacrylsäure
105 g Acrylnitril
350 g einer 15 gew.-%igen wäßrigen Lösung von N-Methylolmethacrylamid
1,8 g einer 25 gew.-%igen wäßrigen Lösung von Natriumvinylsulfonat

14,6 g einer 40 gew.-%igen wäßrigen Lösung von Natrium-n-tetra-decylsulfonat Feststoffgehalt der Dispersion 49,5 Gew.-%, LD-Wert 78 %

5,2 g der ZnO-Paste wurden wie bei DE6 beschrieben eingearbeitet entsprechend 49 mol%

DE11: Eine Mischung aus 591,3 g Wasser, 2,6 g einer 40 gew.-%igen wäßrigen Lösung von Natriumtetradecylsulfonat, 4,2 g einer 25 gew.-%igen wäßrigen Lösung von Natriumvinylsulfonat und 84,3 g der wäßrigen Monomeren-emulsion MI wurde auf die Polymerisationstemperatur von 85°C erhitzt, wobei dem Reaktionsgemisch bei Erreichen der Temperatur von 70°C zusätzlich 43,6 g einer Initiatorlösung von 12 g Natriumperoxidisulfat in 279 g Wasser zugesetzt wurde. Nach 15 minütiger Polymerisation bei 85°C wurden unter Aufrechterhaltung der Polymerisationstemperatur dem Reaktionsgemisch die verbliebenen Mengen der Initiatorlösung sowie der Monomeremulsion M1 im Verlauf von 2 Stunden über getrennte Zuläufe kontinuierlich zugeführt und anschließend noch eine Stunde nachpolymerisiert.

Feststoffgehalt der Dispersion 50,0 Gew.-%, LD-Wert 77 %, $\bar{d}$ = 178,9 nm.

In 100 g dieser Dispersion wurden 5,3 g der ZnO-Paste wie bei DE6 beschrieben eingerührt.

In 95 Gew.-Teile dieser zinkhaltigen Dispersion wurden 5 Gew.-Teile einer wäßrigen Lösung eines Resols mit einem Feststoffgehalt von 20 Gew.-% eingerührt. Das verwendete Resol bestand aus Bisphenol A und Formaldehyd in einem Molverhältnis von 1 zu 3,7. Der Alkaligehalt betrug 2 %.

Verwendete Prüfmethode:

Unter der Wasserfestigkeit oder Naßfestigkeit eines Vliesstoffes versteht man die Reißfestigkeit des nassen Vliesstoffes nach einer definierten Wasserlagerung.

Um den Einfluß des Bindemittels deutlich sichtbar zu machen, wurde für die Prüfungen ein nach dem Naßvliesprozeß (E.A. Schöffmann, Wochenblatt f. Papierfabrikation 97 Nr. 17 (1969) S. 703-710) hergestelltes, bindemittelfreies Vlies aus 70 % Zellstoff und 30 % Zellwolle mit einem Gewicht von 35 g/m$^2$ ausgewählt. Dieses Vlies hat ohne Bindemittel keine Naßreißfestigkeit.

Vliesstücke von ca. 30 cm mal 22 cm wurden auf ein umlaufendes Polyester-Trägergewebe gelegt und mit dem Trägergewebe durch eine flache Imprägnierwanne geführt, welche die Bindemittelflotte enthält. Anschliepend wurde über einem Saugschlitz der überschuß an Imprägnierflotte aus dem Vliesstück abgesaugt. Die Flottenkonzentration und der Unterdruck am Saugschlitz wurden so gewählt, daß nach dem Trocknen ein Bindemittelauftrag von ca. 50 Gew.-% fest bezogen auf Fasergewicht erzielt wurde. Die Trocknungstemperatur betrug 170°C.

Aus den getrockneten Vliesstoffen wurden Streifen von 140 mm mal 50 mm gestanzt. Die Streifen wurden in Wasser von Zimmertemperatur gelegt, welches 1 % Netzmittel enthielt. Nach einer Stunde Wasserlagerung wurde die Reißfestigkeit der nassen Vliesstreifen gemessen.

In der nachstehenden Tabelle 2 sind die Naßreißfestigkeiten notiert, die mit verschiedenen Bindemitteln auf dem beschriebenen Vlies aus Zellstoff und Zellwolle erhalten wurden.

Tabelle 2

| Bindemittel | Naßreißfestigkeit N/5 cm Breite |
|---|---|
| DE 6 | 15 |
| DE 7 | 15 |
| DE 8 | 26 |
| DE 9 | 33 |
| DE 10 | 23 |
| DE 11 | 42 |

**Patentansprüche**

1. Verwendung von wäßrigen Polymerisatdispersionen, welche dadurch erhältlich sind, daß man in eine wäßrige Ausgangsdispersion, enthaltend

A) 25 bis 60 Gew.-%, bezogen auf die Ausgangsdispersion, eines als disperse Phase vorliegenden Polymerisats A, das aus

a) 3 bis 55 Gew.-% wenigstens einer 3 bis 5 C-Atome enthaltenden $\alpha,\beta$-monoethylenisch ungesättigten Mono- oder Dicarbonsäure, eines Anhydrids dieser Säuren oder eines Gemisches dieser Monomeren (Monomere a) und

b) 45 bis 97 Gew.-% wenigstens eines sonstigen copolymerisierbaren Monomeren (Monomer b)

in polymerisierter Form aufgebaut ist und in disperser Verteilung eine mittlere Teilchengröße von 20 bis 400 nm aufweist,

B) wirksamen Mengen an Emulgatoren und

C) Wasser als Restmenge,

bei einer Temperatur, die unterhalb des Siedepunktes von reinem Wasser und oberhalb der Glasübergangstemperatur des Polymerisates A liegt, bezogen auf die Molzahl der in Form der Monomeren a einpolymerisierten Säurefunktionen des Polymerisates A, 5 bis 60 mol-% wenigstens eines der zweiwertigen Metalle Magnesium, Calcium oder Zink in Form seines Oxids, Hydroxids, Carbonats oder Hydrogencarbonats oder in Form eines Gemisches dieser basischen Salze einarbeitet, als Bindemittel für Vliesstoffe.

2.  Verwendung von Polymerisatdispersionen nach Anspruch 1, wobei Polymerisat A eine Glasübergangstemperatur von -40 bis 60°C aufweist und die Polymerisatdispersionen, bezogen auf die Molzahl der in Form der Monomeren a einpolymerisierten Säurefunktionen des Polymerisates A, 40 bis 55 mol-% wenigstens eines der zweiwertigen Metalle Magnesium, Calcium oder Zink in Form seines Oxids, Hydroxids, Carbonats oder Hydrogencarbonats oder in Form eines Gemisches dieser basischen Salze eingearbeitet enthalten.

3.  Verwendung von Polymerisatdispersionen nach den Ansprüchen 1 oder 2, wobei Polymerisate A in einpolymerisierter Form eine der Monomerenzusammensetzungen I bis III aufweisen:

| I) | 3 bis 45 Gew.-% | Monomere a |
| | 55 bis 97 Gew.-% | wenigstens eines Esters der Acryl- oder Methacrylsäure mit einem 1 bis 10 C-Atome enthaltenden aliphatischen Alkohol und |
| | 0 bis 40 Gew.-% | sonstige copolymerisierbare Monomere |
| | | |
| II) | 3 bis 30 Gew.-% | Monomore a |
| | 35 bis 52 Gew.-% | Styrol und |
| | 35 bis 45 Gew.-% | Butadien |
| | | |
| III) | 5 bis 25 Gew.-% | Monomere a |
| | 40 bis 70 Gew.-% | Vinylacetat, Vinylpropionat oder deren Gemisch und |
| | 5 bis 40 Gew.-% | Ethylen. |

4.  Verwendung von Polymerisatdispersionen nach den Ansprüchen 1 oder 2, wobei Polymerisate A in einpolymerisierter Form eine der Monomerenzusammensetzungen IV bis VI aufweisen:

| IV) | 3 bis 44,5 Gew.-% | Monomere a |
| | 55 bis 96,5 Gew.-% | wenigstens eines Esters der Acryl- oder Methacrylsäure mit einem 1 bis 10 C-Atome enthaltenden aliphatischen Alkohol, |
| | 0,5 bis 5 Gew.-% | N-Methylolacrylamid, N-Methylolmethacrylamid, Acrylamidoglycolsäure oder Methacrylamidoglycolsäure und |
| | 0 bis 40 Gew.-% | sonstige copolymerisierbare Monomere |
| | | |
| V) | 3 bis 30 Gew.-% | Monomere a, |
| | 35 bis 48 Gew.-% | Styrol, |
| | 35 bis 45 Gew.-% | Butadien und |
| | 0,5 bis 5 Gew.-% | N-Methylolacrylamid, N-Methylolmethacrylamid, Acrylamidoglycolsäure oder Methacrylamidoglycolsäure |
| | | |
| VI) | 5 bis 20 Gew.-% | Monomere a, |
| | 40 bis 70 Gew.-% | Vinylacetat, Vinylpropionat oder deren Gemisch, |
| | 5 bis 40 Gew.-% | Ethylen und |

(fortgesetzt)

| | 0,5 bis 5 Gew.-% | N-Methylolacrylamid, N-Methylolmethacrylamid, Acrylamidoglycolsäure oder Methacrylamidoglycolsäure |
|---|---|---|

**5.** Verwendung von Polymerisatdispersionen nach den Ansprüchen 1 bis 4, wobei die Polymerisatdispersionen Zinkoxid eingearbeitet enthalten.

**6.** Vliesstoffe, enthaltend als Bindemittel das Polymerisat der gemäß der Ansprüchen 1-5 verwendeten wäßrigen Polymerisatdispersionen.

**7.** Vliesstoffe nach Anspruch 6, enthaltend zusätzlich 0,5 bis 20 Gew.-Teile, bezogen auf 100 Gew.-Teile des Polymerisates der wäßrigen Polymerdispersion, eines Resols oder Aminoplasts.

**8.** Bituminierte Dachbahnen auf der Basis von Vliesstoffen gemäß den Ansprüchen 6 und 7.

## Claims

**1.** The use of an aqueous polymer dispersion obtainable by incorporating into an aqueous starting dispersion containing

A) from 25 to 60 % by weight, based on the starting dispersion, of a polymer A as the disperse phase, built up from

a) from 3 to 55 % by weight of one or more $\alpha,\beta$-monoethylenically unsaturated mono- or dicarboxylic acids containing from 3 to 5 carbon atoms, of an anhydride of these acids or of a mixture of these monomers (monomers a), and
b) from 45 to 97 % by weight of one or more other copolymerizable monomers (monomer b),

in polymerized form and having, in disperse form, a mean particle size of from 20 to 400 nm,
B) an effective amount of an emulsifier, and
C) water as the remainder,

at a temperature below the boiling point of pure water and above the glass transition point of the polymer A, from 5 to 60 mol-%, based on the number of moles of acid functions of the polymer A copolymerized in the form of the monomers a, of one or more of the divalent metals magnesium, calcium and zinc in the form of an oxide, hydroxide, carbonate or bicarbonate or in the form of a mixture of these basic salts, as a binder for a nonwoven material.

**2.** The use of a polymer dispersion as claimed in claim 1, where polymer A has a glass transition point of from -40 to 60°C and where the polymer dispersion contains, based on the number of moles of the acid functions of the polymer A, copolymerized in the form of the monomers a, from 40 to 55 mol-% of one or more of the divalent metals magnesium, calcium and zinc incorporated in the form of an oxide, hydroxide, carbonate or bicarbonate or in the form of a mixture of these basic salts.

**3.** The use of a polymer dispersion as claimed in claim 1 or 2, where polymer A in copolymerized form has one of the monomer compositions I to III:

| I) | from 3 to 45 % | by weight of monomers a |
|---|---|---|
| | from 55 to 97 % | by weight of one or more esters of acrylic or methacrylic acid with an aliphatic alcohol containing from 1 to 10 carbon atoms, and |
| | from 0 to 40 % | by weight of other copolymerizable monomers, |
| II) | from 3 to 30 % | by weight of monomers a, |
| | from 35 to 52 % | by weight of styrene, and |
| | from 35 to 45 % | by weight of butadiene, |

(continued)

| III) | from 5 to 25 % | by weight of monomers, a |
|---|---|---|
| | from 40 to 70 % | by weight of vinyl acetate, vinyl propionate or a mixture thereof, and |
| | from 5 to 40 % | by weight of ethylene. |

4. The use of a polymer dispersion as claimed in claim 1 or 2, where polymer A in copolymerized form has one of the monomer compositions IV to VI:

```
IV)   from  3 to 44.5        % by weight of monomers a
      from 55 to 96.5 % by weight of one or more esters
                      of acrylic or methacrylic acid with
                      an aliphatic alcohol having from 1
                      to 10 carbon atoms,
      from  0.5 to 5  % by weight of N-methylolacryl-
                      amide,   N-methylolmethacrylamide,
                      acrylamidoglycolic    acid    or

                      methacrylamidoglycolic acid, and
      from  0 to 40   % by weight of other copolymer-
                      izable monomers,


 V)   from  3 to 30   % by weight of monomers a,
      from 35 to 48   % by weight of styrene,
      from 35 to 45   % by weight of butadiene, and
      from  0.5 to 5  % by weight of N-methylolacryl-
                      amide,   N-methylolmethacrylamide,
                      acrylamidoglycolic acid or meth-
                      acrylamidoglycolic acid,


VI)   from  5 to 20   % by weight of monomers a,
      from 40 to 70   % by weight of vinyl acetate, vinyl
                      propionate or a mixture thereof,
      from  5 to 40   % by weight of ethylene, and
      from  0.5 to 5  % by weight of N-methylolacryl-
                      amide,   N-methylolmethacrylamide,
                      acrylamidoglycolic acid or meth-
                      acrylamidoglycolic acid.
```

5. The use of a polymer dispersion as claimed in any of claims 1 to 4, where the polymer dispersion contains zinc oxide.

6. A nonwoven material which contains, as binder, a polymer of an aqueous polymer dispersion used as claimed in any of claims 1 to 5.

7.  A nonwoven material as claimed in claim 6, which additionally contains from 0.5 to 20 parts by weight, based on 100 parts by weight of the polymer of the aqueous polymer dispersion, of a resol or aminoplastic.

8.  Bitumen-treated roof sheeting based on a nonwoven material as claimed in claim 6 or 7.


**Revendications**

1.  Utilisation de dispersions aqueuses de polymères, que l'on peut obtenir par l'incorporation, par rapport au nombre de moles des fonctions acides du polymère A incorporées par polymérisation sous forme des monomères a, de 5 à 60% molaires d'au moins l'un des métaux bivalents que sont le magnésium, le calcium ou le zinc, sous forme de son oxyde, hydroxyde, carbonate, ou sous la forme d'un mélange de ces sels basiques à titre de liants pour des nappes ou mats, à une dispersion aqueuse de départ, qui contient

    A) 25 à 60% en poids, par rapport à la dispersion de départ, d'un polymère A se présentant sous forme de phase dispersée, qui est constitué

    a) de 3 à 55% en poids d'au moins un acide mono- ou dicarboxylique $\alpha,\beta$-monoéthyléniquement insaturé et comportant de 3 à 5 atomes de carbone, d'un anhydride de cet acide, ou d'un mélange de ces monomères (monomères a) et
    b) de 45 à 97% en poids d'au moins un autre monomère copolymérisable (monomère b)

    sous forme polymérisée et qui présente un calibre moyen des particules de 20 à 400 nm en répartition dispersée,
    B) des quantités actives d'émulsifs et
    C) de l'eau à titre de quantité restante,

    à une température inférieure au point d'ébullition de l'eau pure et supérieure à la température de transition vitreuse du polymère A.

2.  Utilisation de dispersions de polymères suivant la revendication 1, caractérisée en ce que le polymère A possède une température de transition vitreuse de -40°C à 60°C et en ce que les dispersions de polymères contiennent, par rapport au nombre de moles des fonctions acides du polymère A incorporées sous forme des monomères a, de 40 à 55% molaires d'au moins l'un des métaux divalents magnésium, calcium ou zinc, sous forme de son oxyde, hydroxyde, carbonate, ou hydrogénocarbonate, ou sous la forme d'un mélange de ces sels basiques.

3.  Utilisation de dispersions de polymères suivant l'une quelconque des revendications 1 et 2, caractérisée en ce que les polymères A présentent, sous forme incorporée par polymérisation, l'une des compositions en monomères I à III :

    I) 3 à 45% de monomères a 55 à 97% en poids d'au moins un ester de l'acide acrylique ou de l'acide méthacrylique avec un alcool aliphatique contenant de 1 à 10 atomes de carbone et 0 à 40% en poids d'autres monomères copolymérisables,
    II) 3 à 30% en poids de monomères a 35 à 52% en poids de styrène et 35 à 45% en poids de butadiène,
    III) 5 à 25% en poids de monomères a 40 à 70% en poids d'acétate de vinyle, de propionate de vinyle, ou de leurs mélanges et 5 à 40% en poids d'éthylène.

4.  Utilisation de dispersions de polymères suivant l'une quelconque des revendications 1 et 2, caractérisée en ce que les polymères A présentent, sous forme incorporée par polymérisation, une des compositions en monomères IV à VI :

    IV) 3 à 44,5% en poids de monomères a
    55 à 96,5% en poids d'au moins un ester de l'acide acrylique ou de l'acide méthacrylique avec un alcool aliphatique contenant de 1 à 10 atomes de carbone
    0,5 à 5% en poids de N-méthylolacrylamide, de N-méthylolméthacrylamide, d'acide acrylamidoglycolique ou d'acide méthacrylamidoglycolique et 0 à 40% en poids d'autres monomères copolymérisables

V) 3 à 30% en poids de monomères a

35 à 48% en poids de styrène

35 à 45% en poids du butadiène et

0,5 à 5% en poids de N-méthylolacrylamide, de N-méthylolméthacrylamide, d'acide acrylamidoglycolique, ou d'acide méthacrylamidoglycolique

VI) 5 à 20% en poids de monomères a

40 à 70% en poids d'acétate de vinyle, de propionate de vinyle ou de leurs mélanges

5 à 40% en poids d'éthylène et

0,5 à 5% en poids de N-méthylolacrylamide, de N-méthylolméthacrylamide, d'acide acrylamidoglycolique, ou d'acide méthacrylamidoglycolique.

5. Utilisation de dispersions suivant l'une quelconque des revendications 1 à 4, caractérisée en ce que les dispersions de polymères contiennent de l'oxyde de zinc incorporé.

6. Nappes ou mats, contenant, à titre de liant, le polymère des dispersions aqueuses de polymères utilisées suivant l'une quelconque des revendications 1 à 5.

7. Nappes ou mats suivant la revendication 6, contenant complémentairement de 0,5 à 20 parties en poids, par rapport à 100 parties en poids du polymère des dispersions aqueuses de polymères, d'un résol ou d'un aminoplaste.

8. Bandes de couverture bituminées, à base des nappes ou mats suivant l'une quelconque des revendications 6 et 7.